# FASCICULE DE BREVET EUROPEEN

(11) **EP 3 389 165 B1**
(45) Date de publication et mention de la délivrance du brevet: **29.01.2020**
(21) Numéro de dépôt: 18163753.9
(22) Date de dépôt: 23.03.2018
(51) Int. Cl.: H02K 3/52

(54) **DISPOSITIF DE GUIDAGE AMÉLIORÉ D'UN ENSEMBLE DE FILS ÉLECTRIQUES POUR ROTOR DE MOTEUR ÉLECTRIQUE**
VERBESSERTE FÜHRUNGSVORRICHTUNG EINER GESAMTHEIT VON ELEKTRISCHEN DRÄHTEN FÜR ROTOR EINES ELEKTROMOTORS
DEVICE FOR IMPROVED GUIDING OF A SET OF ELECTRICAL WIRES FOR AN ELECTRIC MOTOR ROTOR

(30) Priorité: 14.04.2017 FR 1753287
(43) Date de publication de la demande: 17.10.2018
(73) Titulaire: RENAULT s.a.s., 92100 Boulogne-Billancourt (FR)
(72) Inventeur: BERNARDIN, FABRICE, 78740 VAUX SUR SEINE (FR); MOTTE, Emmanuel, 76150 SAINT JEAN DU CARDONNAY (FR); BIROLLEAU, Damien, 78180 Montigny le bretonneux (FR)

(56) Documents cités:
- WO-A1-2013/083407
- WO-A2-2013/136022

## Description

La présente invention concerne le domaine des générateurs à grande vitesse et, plus particulièrement des dispositifs de guidage pour fixer des bobines de fils électriquement conducteurs aux rotors de tels générateurs, et notamment autour d'un bloc électriquement conducteur du rotor.

Un moteur électrique à rotor bobiné, tel qu'une machine électrique utilisée dans un véhicule automobile à traction électrique, est réalisé à partir de fils électriquement conducteurs, tels que des fils de cuivre émaillés. Les fils électriquement conducteurs sont bobinés autour d'un noyau réalisé par un empilement de tôles électriquement conductrices.

Les rotors adaptés aux générateurs à grande vitesse sont soumis à des conditions de fonctionnement difficiles, et notamment à de fortes sollicitations mécaniques dans le sens radial. Il est donc nécessaire de bien maintenir les bobinages d'un rotor soumis à de fortes sollicitations centrifuges. Les rotors de tels générateurs doivent donc être adaptés pour fonctionner dans de telles conditions.

Toutefois, l'architecture du dispositif de guidage doit en même temps pouvoir s'adapter aux mouvements des pôles dans le sens radial tels que ceux dus, par exemple, à la dilatation thermique des pôles. Elle doit, de surcroît, pouvoir s'adapter aux mouvements dans le sens angulaire de manière à simplifier la mise en œuvre du dispositif de guidage sur le rotor.

A cet égard, le document FR 2 984 034 B1 décrit un dispositif de guidage pour le bobinage de fils électriquement conducteurs autour d'un bloc électriquement conducteur d'un rotor de moteur électrique. Le dispositif divulgué comprend quatre branches disposées à 90° l'une de l'autre et s'étendant radialement depuis un arbre qui s'étend axialement dans le rotor. Chaque branche est reliée à la branche adjacente par un moyen de liaison élastique. Les moyens de liaison présentent une portion arrondie en forme d'oméga.

La liaison élastique confère une bonne élasticité du dispositif de guidage pour sa mise en place sur le bloc électriquement conducteur.

Cependant, les mouvements d'une branche engendrés lors du montage du dispositif de guidage et lors du fonctionnement du rotor sont transmis aux branches adjacentes au travers des moyens de liaison. Les contraintes ainsi créées fragilisent les moyens de liaison qui sont par conséquent sujets à rupture.

Le document WO2013136022 divulgue un dispositif de guidage pour le bobinage d'un rotor, comportant un anneau de passage de l'arbre rotor, et des branches aptes à coiffer chaque pôle du rotor, qui sont vissées à l'anneau.

L'invention propose de pallier les inconvénients mentionnés en proposant un dispositif de guidage facile à mettre en œuvre sur le rotor et autorisant le mouvement des branches dans le radial et dans le sens angulaire.

Selon un aspect, il est proposé un dispositif de guidage pour le bobinage de fils électriquement conducteurs autour des pôles d'un bloc électriquement conducteur d'un rotor de moteur électrique comprenant un arbre s'étendant axialement dans le rotor, le dispositif comprenant au moins deux branches s'étendant radialement à partir de l'arbre.

En outre, le dispositif de guidage comprend un anneau de réception configuré pour s'étendre autour de l'arbre et autour duquel sont disposées les branches, chaque branche étant reliée indépendamment l'une de l'autre à l'anneau par un moyen de liaison élastique comprenant au moins une patte, l'épaisseur d'une patte dans le plan radial du rotor étant inférieure à l'épaisseur de la branche à laquelle est relié le moyen de liaison comprenant ladite patte de sorte que le dispositif autorise la déformation axiale et angulaire des branches.

De préférence, chaque branche comprend des rainures de guidage destinées à coopérer avec des encoches de réception prévues sur le bloc électriquement conducteur et destinées à recevoir les fils.

Avantageusement, chaque patte comprend au moins deux portions adjacentes s'étendant chacune dans un plan, les deux portions formant un angle non nul. Le moyen de liaison élastique forme ainsi un ressort admettant les mouvements dans le sens radial et angulaire des branches.

De préférence, les deux portions adjacentes d'une première patte forment un angle aigu disposé en vis-à-vis d'un angle aigu formé par les deux portions adjacentes d'une seconde patte.

Selon une caractéristique, le dispositif de guidage peut être formé en une pièce unique, facilitant la construction et la mise en œuvre du rotor.

Selon une autre caractéristique, les branches peuvent être symétriques deux à deux par rapport à l'axe de symétrie du rotor.

Selon une alternative, chaque moyen de liaison élastique comprend une portion arrondie en forme d'oméga.

En outre, le dispositif de guidage peut comprendre quatre branches configurées pour former un moteur électrique à quatre pôles.

Selon une alternative, le dispositif de guidage peut comprendre huit branches configurées pour former un moteur électrique à huit pôles.

Selon un autre aspect, il est proposé un rotor de moteur électrique comprenant un arbre s'étendant axialement dans le rotor, un bloc électriquement conducteur s'étendant radialement à partir de l'arbre du rotor.

En outre, le rotor comprend un dispositif de guidage de fils électriquement conducteurs autour dudit bloc tel que décrit ci-dessus.

D'autres buts, avantages et caractéristiques ressortiront de la description qui va suivre, donnée à titre d'exemple purement illustratif et faite en référence aux dessins annexés sur lesquels :
- La figure 1 représente schématiquement une vue en perspective d'un rotor de moteur électrique selon l'invention;
- La figure 2 illustre une vue de face en perspective d'un dispositif de guidage selon la figure 1 ; et
- La figure 3 illustre une vue de face d'un dispositif de guidage selon la figure 1.

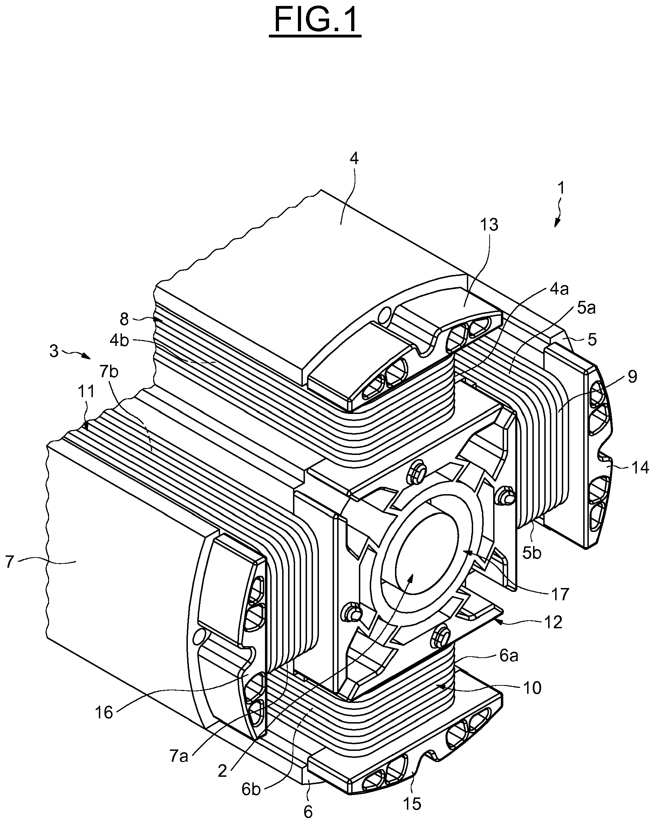

Tel qu'illustré sur la figure 1, un rotor de machine électrique, référencée 1 dans son ensemble, comprend un arbre 2 qui s'étend axialement au travers du rotor 1 et un bloc électriquement conducteur 3 qui s'étend radialement à partir de l'arbre 2.

Le bloc électriquement conducteur 3 illustré comprend quatre pôles 4, 5, 6, 7 disposés à un angle, par exemple, de 90° les uns des autres. De préférence, la valeur de l'angle séparant deux pôles est égale à 360 que l'on divise par le nombre de pôles du rotor.

Chaque pôle 4, 5, 6, 7 comprend deux faces latérales comportant chacune une encoche de réception 4a, 4b, 5a, 5b, 6a, 6b, 7a, 7b d'un ensemble de fils électriquement conducteurs 8, 9, 10, 11. De manière alternative, les quatre pôles 4, 5, 6, 7 peuvent être couplés ensemble ou réalisés dans un même empilement de tôles de manière à former un empilement de tôles en croix.

Le rotor 1 comprend un dispositif de guidage 12 des fils électriquement conducteurs 8, 9, 10, 11 autour du bloc électriquement conducteur 3 et, notamment autour de chaque pôle 4, 5, 6, 7.

Comme illustré sur les figures, le dispositif de guidage 12 comprend quatre branches 13, 14, 15, 16 s'étendant radialement en s'écartant de l'arbre 2 du rotor 1 et symétriques par rapport à l'axe du rotor 1. Chaque branche 13, 14, 15, 16 est destinée à être fixée sur un pôle 4, 5, 6, 7 du rotor 1, de sorte que le bobinage de quatre bobines de fils 8, 9, 10, 11 est possible. Le dispositif de guidage 12 présente une forme substantiellement en croix et une partie centrale 17 de passage de l'arbre 2 du rotor 1.

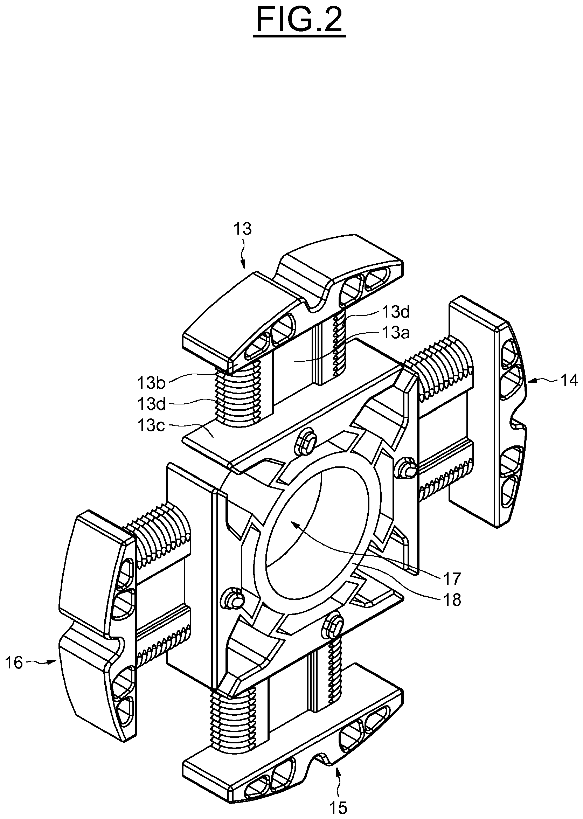

Tel qu'illustré en détail sur la figure 2, et dont uniquement la description de la branche 13 sera détaillée, les autres branches 14, 15, 16 étant identiques à la branche 13, chaque branche 13 comporte une portion principale 13a, destinée à recevoir un ensemble de fils conducteurs 8, et délimitée par deux épaulements 13b, 13c réalisés respectivement à une extrémité de la branche 13 correspondante. Chacun des bords latéraux de la portion principale 13a est disposé en regard d'une encoche 4a, 4b pratiquée sur le bloc conducteur 3, de sorte qu'une portion principale 13a permet à un ensemble de fils 8 de rester positionné entre deux épaulements 13b, 13c d'une branche 13 et dans les encoches de réception 4a, 4b de chaque pôle 4. Chaque fil conducteur 8 est donc bobiné autour de la portion principale 13a du dispositif de guidage 12 entre les deux épaulements 13b, 13c selon une direction parallèle aux épaulements 13b, 13c. Les épaulements 13b, 13c possèdent une épaisseur permettant d'enrouler le fil conducteur 8 sur plusieurs couches autour de la portion principale 13a et permettant de maintenir l'ensemble de fils conducteurs 8 dans l'axe de la portion principale 13a.

La portion principale 13a comprend une pluralité de rainures de guidage 13d pratiquées sur chaque bord latéral de la portion principale 13a et permettant de guider la première couche de bobinage 8 afin d'obtenir une bonne répartition du bobinage des fils conducteurs 8 sur toute la longueur de la portion principale 13a séparant les deux épaulements 13b, 13c d'une branche 13. Chaque bord latéral, et notamment la pluralité de rainures 13d d'une portion principale 13a est aligné avec une encoche 4a, 4b pratiquée sur le bloc conducteur 3, afin de placer correctement les fils conducteurs 8.

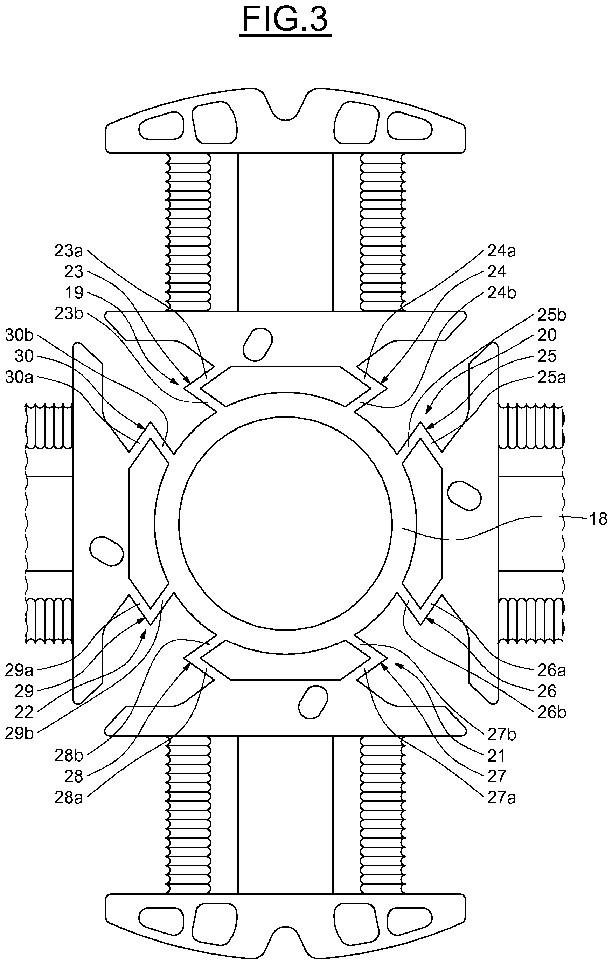

Tel qu'illustré à la figure 3, le dispositif de guidage 12 comprend, en outre, un anneau de réception 18 autour duquel sont disposées les branches 13, 14, 15, 16. Chaque branche 13, 14, 15, 16 est reliée indépendamment l'une de l'autre à l'anneau 18 par un moyen de liaison élastique, respectivement 19, 20, 21, 22. Le diamètre de l'anneau 18 est adapté de sorte que l'anneau 18 puisse s'étendre autour de l'arbre 2.

Dans l'exemple illustré, chaque moyen de liaison 19, 20, 21, 22 comprend deux pattes 23, 24, 25, 26, 27, 28, 29, 30 formant un ressort. Chaque patte comprend deux portions adjacentes 23a, 23b, 24a, 24b, 25a, 25b, 26a, 26b, 27a, 27b, 28a, 28b, 29a, 28b, 30a, 30b s'étendant chacune dans un plan, les deux portions formant un angle non nul, autrement dit un angle obtus et un angle aigu. Une première portion 23a, 24a, 25a, 26a, 27a, 28a, 29a, 30a de chaque patte est reliée à une branche 13, 14, 15, 16 et une deuxième portion 23b, 24b, 25b, 26b, 27b, 28b, 29b, 30b est reliée à l'anneau 18. Les deux pattes de chaque moyen de liaison 19, 20, 21, 22 sont disposées de sorte que les deux angles aigus ainsi formés sont en vis-à-vis.

Bien entendu, dans un mode de réalisation différent, le nombre de pattes de chaque moyen de liaison ainsi que le nombre de portions de chaque patte pourront être supérieurs à deux.

L'épaisseur d'une patte 23, 24, dans le plan radial du rotor, est inférieure à l'épaisseur, dans ce même plan, de la branche 13 à laquelle est relié le moyen de liaison comprenant ladite patte et, de préférence, inférieure en particulier à la portion principale 13a de la branche 13. De préférence, l'épaisseur de la patte est comprise dans une plage de 40% à 50% de l'épaisseur de la portion principale 13a. Il est ainsi possible de donner l'élasticité souhaitée à la patte.

En outre, en alternative des pattes, les moyens de liaison élastique 19, 20, 21, 22 pourront comprendre une portion arrondie en forme d'oméga ou toute autre forme adéquate pour le maintien des branches sur l'anneau.

Un tel dispositif de guidage permet avantageusement de rendre les différentes branches indépendantes en découplant leurs mouvements. En parallèle, le dispositif autorise la déformation axiale et angulaire des branches pour sa mise en œuvre sur le rotor, tout en assurant la fixation et le maintien d'un bobinage de fils de façon fiable et peu coûteux.

## Revendications

1. Dispositif de guidage (12) pour le bobinage de fils électriquement conducteurs (8, 9) autour des pôles d'un bloc électriquement conducteur (3) d'un rotor (1) de moteur électrique comprenant un arbre (2) s'étendant axialement dans le rotor (1), le dispositif (12) comprenant au moins deux branches (13, 14) s'étendant radialement à partir de l'arbre (2), **caractérisé en ce qu'**il comprend un anneau de réception (18) configuré pour s'étendre autour de l'arbre (2) et autour duquel sont disposées les branches (13, 14), **caractérisé en ce que** chaque branche (13, 14) est reliée indépendamment l'une de l'autre à l'anneau (18) par un moyen de liaison élastique (19, 20) comprenant au moins une patte (23, 24, 25, 26), l'épaisseur d'une patte (23, 24) dans le plan radial du rotor étant inférieure à l'épaisseur de la branche (13) à laquelle est relié le moyen de liaison (19) comprenant ladite patte (23, 24) de sorte que le dispositif autorise la déformation axiale et angulaire des branches (13).

2. Dispositif de guidage selon la revendication 1, **caractérisé en ce que** chaque branche (13, 14) comprenant des rainures de guidage (13d) destinées à coopérer avec des encoches de réception (4a, 4b, 5a, 5b) prévues sur le bloc électriquement conducteur (3) et destinées à recevoir les fils (8, 9).

3. Dispositif de guidage selon la revendication 1, **caractérisé en ce que** chaque patte (23, 24, 25, 26) comprend au moins deux portions adjacentes (23a, 23b, 24a, 24b, 25a, 25b, 26a, 26b) s'étendant chacune dans un plan, les deux portions (23a, 23b, 24a, 24b, 25a, 25b, 26a, 26b) formant un angle non nul.

4. Dispositif de guidage selon la revendication 3, **caractérisé en ce que** les deux portions adjacentes (23a, 23b, 25a, 25b) d'une première patte (23, 25) forment un angle aigu disposé en vis-à-vis d'un angle aigu formé par les deux portions adjacentes (24a, 24b, 26a, 26b) d'une seconde patte (24, 26).

5. Dispositif de guidage selon l'une quelconque des revendications précédentes, **caractérisé en ce qu'**il est formé en une pièce unique.

6. Dispositif de guidage selon la revendication 1, **caractérisé en ce que** chaque moyen de liaison élastique (19, 20) comprend une portion arrondie en forme d'oméga.

7. Dispositif de guidage selon l'une quelconque des revendications précédentes, **caractérisé en ce que** les branches (13, 14) sont symétriques deux à deux par rapport à l'axe de symétrie du rotor (1).

8. Dispositif de guidage selon l'une quelconque des revendications précédentes, **caractérisé en ce qu'**il comprend quatre branches (13, 14, 15, 16) configurées pour former un moteur électrique à quatre pôles.

9. Dispositif de guidage selon l'une quelconque des revendications 1 à 7, **caractérisé en ce qu'**il comprend huit branches (13, 14, 15, 16) configurées pour former un moteur électrique à huit pôles.

10. Rotor de moteur électrique comprenant un arbre (2) s'étendant axialement dans le rotor (1), un bloc électriquement conducteur (3) s'étendant radialement à partir de l'arbre (2) du rotor (1), **caractérisé en ce qu'**il comprend un dispositif de guidage (12) de fils électriquement conducteurs (8, 9) autour dudit bloc (3) selon l'une quelconque des revendications précédentes.

## Patentansprüche

1. Führungsvorrichtung (12) für die Wicklung elektrisch leitender Drähte (8, 9) um die Pole eines elektrisch leitenden Blocks (3) eines Rotors (1) eines Elektromotors, der eine Welle (2), die sich axial in dem Rotor (1) erstreckt, beinhaltet, wobei die Vorrichtung (12) mindestens zwei Arme (13, 14) beinhaltet, die sich radial von der Welle (2) erstrecken, **dadurch gekennzeichnet, dass** sie einen Aufnahmering (18) umfasst, der dazu konfiguriert ist, sich um die Welle (2) zu erstrecken, und um den die Arme (13, 14) angeordnet sind, **dadurch gekennzeichnet, dass** jeder Arm (13, 14) unabhängig von den anderen Armen mit Hilfe eines elastischen Verbindungsmittels (19, 20), das mindestens eine Lasche (23, 24, 25, 26) beinhaltet, mit dem Ring (18) verbunden ist, wobei die Stärke einer Lasche (23, 24) in der radialen Ebene des Rotors kleiner ist als die Stärke des Arms (13), mit dem das Verbindungsmittel (19), das die Lasche (23, 24) beinhaltet, verbunden ist, sodass die Vorrichtung die axiale und winkelförmige Verformung der Arme (13) gestattet.

2. Führungsvorrichtung nach Anspruch 1, **dadurch gekennzeichnet, dass** jeder Arm (13, 14) Führungsnuten (13d) beinhaltet, die dazu bestimmt sind, mit an dem elektrisch leitenden Block (3) bereitgestellten Aufnahmekerben (4a, 4b, 5a, 5b) zusammenzuwirken, und dazu bestimmt sind, die Drähte (8, 9) aufzunehmen.

3. Führungsvorrichtung nach Anspruch 1, **dadurch gekennzeichnet, dass** jede Lasche (23, 24, 25, 26) mindestens zwei benachbarte Abschnitte (23a, 23b, 24a, 24b, 25a, 25b, 26a, 26b) beinhaltet, die sich jeweils in einer Ebene erstrecken, wobei die zwei Abschnitte (23a, 23b, 24a, 24b, 25a, 25b, 26a, 26b) einen Winkel ungleich Null bilden.

4. Führungsvorrichtung nach Anspruch 3, **dadurch gekennzeichnet, dass** die zwei benachbarten Abschnitte (23a, 23b, 25a, 25b) einer ersten Lasche (23, 25) einen spitzen Winkel bilden, der gegenüber einem spitzen Winkel angeordnet ist, der durch die zwei benachbarten Abschnitte (24a, 24b, 26a, 26b) einer zweiten Lasche (24, 26) gebildet wird.

5. Führungsvorrichtung nach einem der vorhergehenden Ansprüche, **dadurch gekennzeichnet, dass** sie einstückig ausgebildet ist.

6. Führungsvorrichtung nach Anspruch 1, **dadurch gekennzeichnet, dass** jedes elastische Verbindungsmittel (19, 20) einen abgerundeten, omegaförmigen Abschnitt beinhaltet.

7. Führungsvorrichtung nach einem der vorhergehenden Ansprüche, **dadurch gekennzeichnet, dass** die Arme (13, 14) in Bezug auf die Symmetrieachse des Rotors (1) paarweise symmetrisch sind.

8. Führungsvorrichtung nach einem der vorhergehenden Ansprüche, **dadurch gekennzeichnet, dass** sie vier Arme (13, 14, 15, 16) beinhaltet, die dazu konfiguriert sind, einen vierpoligen Elektromotor zu bilden.

9. Führungsvorrichtung nach einem der vorhergehenden Ansprüche 1 bis 7, **dadurch gekennzeichnet, dass** sie acht Arme (13, 14, 15, 16) beinhaltet, die dazu konfiguriert sind, einen achtpoligen Elektromotor zu bilden.

10. Rotor eines Elektromotors, beinhaltend eine Welle (2), die sich axial in dem Rotor (1) erstreckt, einen elektrisch leitenden Block (3), der sich radial von der Welle (2) des Rotors (1) erstreckt, **dadurch gekennzeichnet, dass** er eine Vorrichtung (12) zum Führen elektrisch leitender Drähte (8, 9) um den Block (3) nach einem der vorhergehenden Ansprüche beinhaltet.

## Claims

1. Guiding device (12) for the winding of the electrically conductive wires (8, 9) around poles of an electrically conductive block (3) of an electric motor rotor (1) comprising a shaft (2) extending axially in the rotor (1), the device (12) comprising at least two branches (13, 14) extending radially from the shaft (2), **characterized in that** it comprises a receiving ring (18) configured to extend around the shaft (2) and around which the branches (13, 14) are disposed, **characterized in that** each branch (13, 14) is linked independently of one another to the ring (18) by an elastic link means (19, 20) comprising at least one lug (23, 24, 25, 26), the thickness of a lug (23, 24) in the radial plane of the rotor being less than the thickness of the branch (13) to which the link means (19) comprising said lug (23, 24) is linked, such that the device allows the axial and angular deformation of the branches (13).

2. Guiding device according to Claim 1, **characterized in that** each branch (13, 14) comprises guiding grooves (13d) intended to cooperate with receiving notches (4a, 4b, 5a, 5b) provided on the electrically conductive block (3) and intended to receive the wires (8, 9).

3. Guiding device according to Claim 1, **characterized in that** each lug (23, 24, 25, 26) comprises at least two adjacent portions (23a, 23b, 24a, 24b, 25a, 25b, 26a, 26b) each extending in a plane, the two portions (23a, 23b, 24a, 24b, 25a, 25b, 26a, 26b) forming a non-zero angle.

4. Guiding device according to Claim 3, **characterized in that** the two adjacent portions (23a, 23b, 25a, 25b) of a first lug (23, 25) form an acute angle disposed opposite an acute angle formed by the two adjacent portions (24a, 24b, 26a, 26b) of a second lug (24, 26).

5. Guiding device according to any one of the preceding claims, **characterized in that** it is formed in a single piece.

6. Guiding device according to Claim 1, **characterized in that** each elastic link means (19, 20) comprises an omega-shaped rounded portion.

7. Guiding device according to any one of the preceding claims, **characterized in that** the branches (13, 14) are symmetrical pairwise relative to the axis of symmetry of the rotor (1).

8. Guiding device according to any one of the preceding claims, **characterized in that** it comprises four branches (13, 14, 15, 16) configured to form a four-pole electric motor.

9. Guiding device according to any one of Claims 1 to 7, **characterized in that** it comprises eight branches (13, 14, 15, 16) configured to form an eight-pole electric motor.

10. Electric motor rotor comprising a shaft (2) extending axially in the rotor (1), an electrically conductive block (3) extending radially from the shaft (2) of the rotor (1), **characterized in that** it comprises a guiding device (12) for guiding electrically conductive wires (8, 9) around said block (3) according to any one of the preceding claims.
